# EUROPEAN PATENT APPLICATION

(11) **EP 4 814 813 A1**
(43) Date of publication of application: **30.09.2026**
(21) Application number: 26164603.8
(22) Date of filing: 13.03.2026
(51) Int. Cl.: G06N 20/00, G06N 3/09, G06N 3/091, G06N 3/0895

(54) **MACHINE LEARNING METHOD AND COMPUTER PROGRAM**

(30) Priority: 25.03.2025 JP 2025049318
(71) Applicant: SCREEN Holdings Co., Ltd., Kyoto-shi, Kyoto 602-8585 (JP)
(72) Inventor: OKAYAMA, Toshiyuki, Kyoto 602-8585 (JP); NOGUCHI, Takeshi, Kyoto 602-8585 (JP); MIYAWAKI, Mirwa, Kyoto 602-8585 (JP); TOKI, Kazuyoshi, Kyoto 602-8585 (JP)
(74) Representative: Goddar, Heinz J.

(57) **Abstract**

A dataset for machine learning is initially prepared. Next, labels are assigned to respective pieces of data included in the dataset. Subsequently, a problem related to the labels of the dataset is alleviated. Then, machine learning is performed using the improved dataset, whereby a learning model is created. Thereafter, a difference in tendency between the dataset used for machine learning and operational data to which the learning model is to be applied during actual operation is judged. The dataset is improved or created again if it is judged that there is a difference in tendency between the dataset and the operational data. In this manner, the quality of the dataset for machine learning is improved through multiple steps. Thus, the learning model is created while the quality of the dataset is maintained at a high level.

## Description

### BACKGROUND OF THE INVENTION

### Field of the Invention

The present disclosure relates to a machine learning method and a computer program.

### Description of the Background Art

Traditionally, a dataset composed of a multiplicity of pieces of data is initially prepared for supervised machine learning. Then, labels are assigned to the respective pieces of data. Thereafter, machine learning is performed using the labeled dataset as training data.

This creates a learning model which is capable of outputting information on a label corresponding to a piece of data when the piece of data is inputted.

A conventional machine learning technique is disclosed, for example, in Japanese Patent Application Laid-Open No. 2023-52502.

In machine learning, the quality of data serving as training data exerts influence on the accuracy of learning models. For continuous creation of high-accuracy learning models, it is hence important to stabilize the quality of data used for machine learning. However, no standard framework has been proposed for determining which data improvement processes are to be performed in which steps before and after the machine learning.

### SUMMARY OF THE INVENTION

It is therefore an object of the present disclosure to provide a technique capable of creating a learning model while maintaining the high quality of datasets for machine learning.

A first aspect of the present disclosure is intended for a method of machine learning, which comprises the steps of: a) collecting multiple pieces of data to thereby prepare a dataset for machine learning; b) assigning labels to respective pieces of data included in the dataset; c) alleviating a problem related to the labels of the labeled dataset; d) performing machine learning using the dataset improved in the step c) to thereby create a learning model; and e) judging a difference in tendency between the dataset and operational data to which the learning model is to be applied during actual operation, wherein the method returns to the step a) or c) if it is judged that there is a difference in tendency between the dataset and the operational data in the step e).

A second aspect of the present disclosure is intended for the method of the first aspect, wherein a piece of data assigned with a specific label is excluded or added or a label is corrected in the step c).

A third aspect of the present disclosure is intended for the method of the first or second aspect, wherein the dataset is inspected for suitability for machine learning after the step a) and before the step b), wherein the method returns to the step a) if there is a problem with the suitability of the dataset for machine learning, and wherein the method proceeds to the step b) if there is no problem with the suitability of the dataset for machine learning.

A fourth aspect of the present disclosure is intended for the method of the third aspect, wherein the suitability inspection includes inspecting a difference in tendency between the dataset and the operational data.

A fifth aspect of the present disclosure is intended for the method of any one of the first to fourth aspects, wherein if it is judged that there is a difference in tendency between the dataset and the operational data in the step e), the method returns to the step c) when it is judged that the tendency of the dataset can be improved by correcting or adding some pieces of data, and the method returns to the step a) when it is judged that the tendency of the dataset cannot be improved by correcting or adding some pieces of data.

A sixth aspect of the present disclosure is intended for a computer program for causing a computer to execute a method of machine learning as recited in any one of the first to fifth aspects.

According to the present disclosure, the quality of the dataset for machine learning is improved through multiple steps. Thus, the learning model is created while the quality of the dataset is maintained at a high level.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a configuration of a machine learning system;
Fig. 2 is a flow diagram showing a procedure of processes for machine learning; and
Fig. 3 is a block diagram conceptually showing functions of a computer involved in the machine learning.

### DESCRIPTION OF THE PREFERRED EMBODIMENTS

A preferred embodiment according to the present disclosure will now be described with reference to the drawings.

### <1. Configuration of Computer>

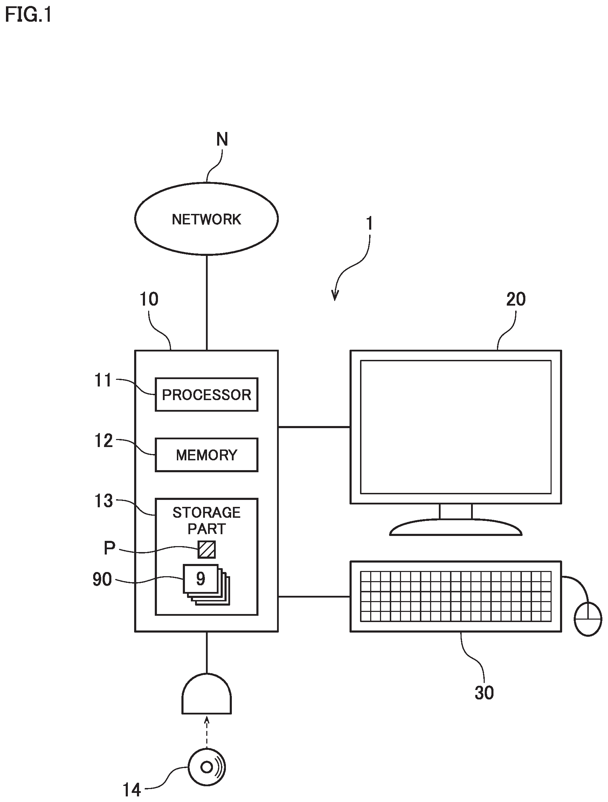

Fig. 1 is a diagram showing a configuration of a machine learning system 1 which executes a machine learning method according to one preferred embodiment. This machine learning system 1 is a device for performing machine learning using a dataset 90 composed of multiple pieces of data 9. As shown in Fig. 1, the machine learning system 1 includes a computer 10, a display part 20, and an input part 30.

The computer 10 is an information processing device which performs various processes relating to machine learning. The computer 10 includes a processor 11 such as a CPU or GPU, a memory 12 such as a RAM, and a storage part 13 such as a hard disk drive.

The storage part 13 stores a computer program P therein. The computer program P is application software for causing the computer 10 to execute various processes relating to machine learning. The computer program P is read from a storage medium 14 such as a CD or DVD, and installed on the computer 10. However, the computer program P may be downloaded to the computer 10 via a network N such as the Internet.

The display part 20 is a device for displaying various pieces of information to be outputted from the computer 10. For example, a liquid crystal display is used for the display part 20. The input part 30 is a device for inputting various pieces of information to the computer 10. For example, a keyboard and a mouse are used for the input part 30. The display part 20 and the input part 30 may be implemented by a single device such as a touch panel display. The display part 20 and the input part 30 are electrically connected to the computer 10.

### <2. Machine Learning Method>

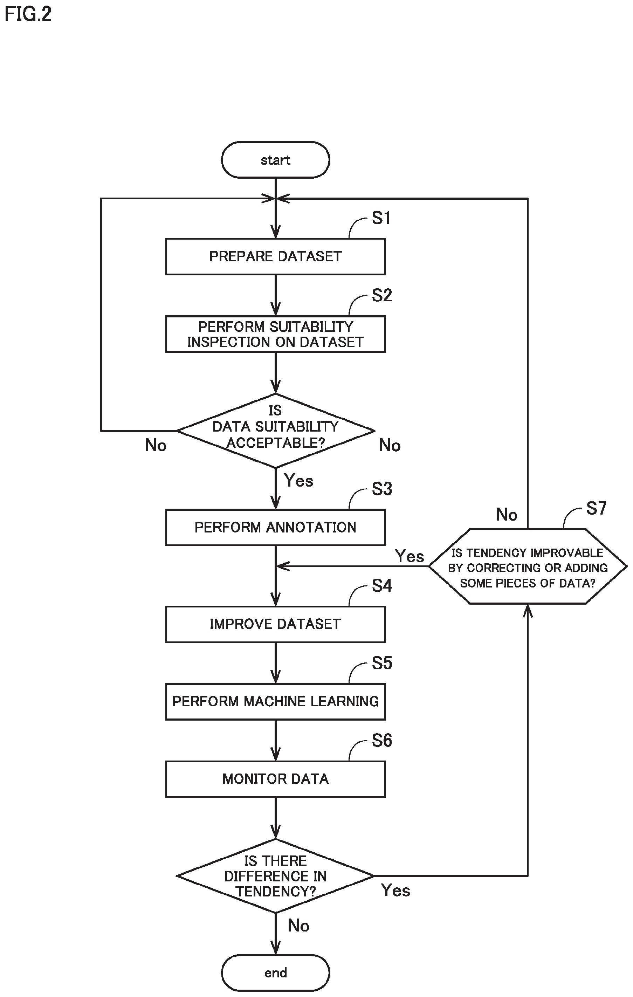

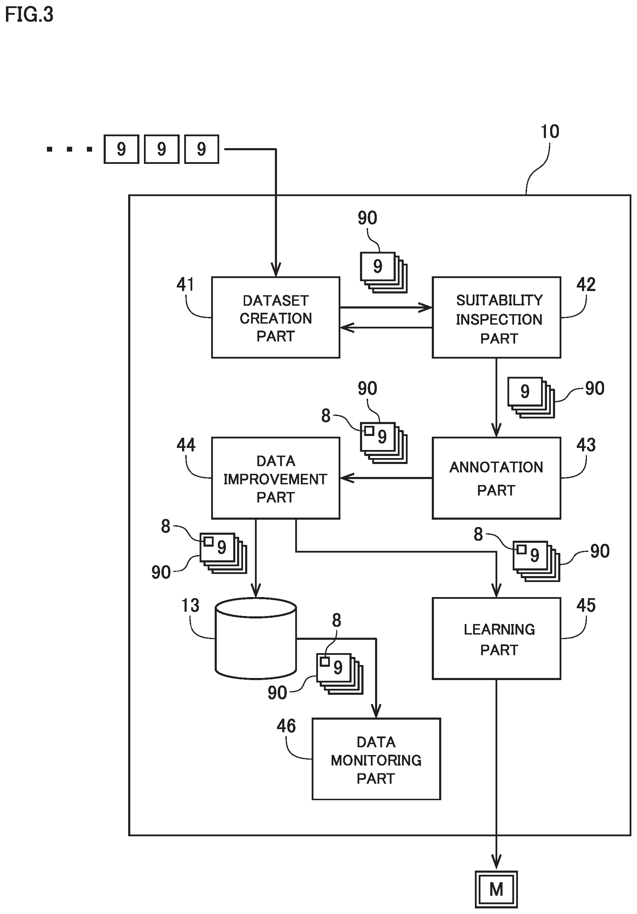

Next, processes for machine learning using the aforementioned machine learning system 1 will be described. Fig. 2 is a flow diagram showing a procedure of the processes for the machine learning. Fig. 3 is a block diagram conceptually showing functions of the computer 10 involved in the machine learning.

As shown in Fig. 3, the computer 10 includes a dataset creation part 41, a suitability inspection part 42, an annotation part 43, a data improvement part 44, a learning part 45, and a data monitoring part 46. The functions of these parts 41 to 46 are implemented by the processor 11 of the computer 10 operating in accordance with the computer program P stored in the storage part 13. However, the functions of these parts 41 to 46 may be assigned to and executed by multiple computers.

When performing machine learning, the dataset creation part 41 initially collects multiple pieces of data 9 to thereby prepare the dataset 90 for the machine learning (Step S1). The multiple pieces of data 9 are inputted to the computer 10, for example, via the network N. Then, the dataset creation part 41 creates the dataset 90 including the multiple pieces of data 9 inputted thereto.

The multiple pieces of data 9 included in the dataset 90 are data to be inputted to a learning model M. For example, if it is desired to create a learning model M which outputs defects of an industrial product when image data about the industrial product is inputted thereto, Step S1 involves inputting multiple pieces of image data as the data 9 to the computer 10. The multiple pieces of image data include image data including various defects and image data about defect-free good products.

However, the multiple pieces of data 9 constituting the dataset 90 are not limited to image data, but may be video data or time-series numeric data indicating values detected by a sensor.

The dataset creation part 41 may detect an unnecessary piece of data 9 among the collected data 9. Then, the dataset creation part 41 may previously exclude the unnecessary piece of data 9 from the dataset 90 in Step S1. For example, the dataset creation part 41 may exclude out-of-focus image data or image data capturing a location not subject to inspection from the dataset 90.

Next, the suitability inspection part 42 performs a suitability inspection on the dataset 90 (Step S2). In this step, the suitability inspection part 42 detects a difference (drift) between the data 9 collected in Step S1 and data (referred to hereinafter as "operational data") to be inputted to the learning model M during actual operation. For example, when the data 9 collected in Step S1 is prepared by a provider of the learning model M, there are cases in which the dataset 90 composed of the data 9 and a dataset of the operational data handled by a user of the learning model M exhibit tendencies different from each other. Step S2 involves detecting such a difference in tendency between such datasets.

Specifically, the suitability inspection part 42 detects the difference in tendency between the datasets through the use of, for example, a machine learning model capable of detecting differences in tendency between datasets. Alternatively, the suitability inspection part 42 may detect the difference in tendency between the datasets by calculating feature vectors of the respective pieces of data and then using a statistical test such as a chi-square test on a feature space where these feature vectors are plotted.

The suitability inspection part 42 may also detect whether the dataset 90 obtained in Step S1 includes the data 9 sufficient for creating the learning model M or not. For example, the suitability inspection part 42 detects whether the dataset 90 includes not less than a predetermined number of pieces of data 9 or not. When it is desired to create a learning model M which detects defects of an industrial product based on image data about the industrial product, the suitability inspection part 42 may detect whether the dataset 90 includes the required number of pieces of image data including defects to be detected or not. Whether the image data includes defects to be detected or not may be detected using a provisionally created learning model.

If it is judged in Step S2 that the dataset 90 obtained in Step S1 and the dataset of the operational data handled by the user of the learning model M exhibit tendencies different from each other or if it is judged in Step S2 that the dataset 90 does not include the sufficient data 9, the procedure returns to Step S1 and the creation of the dataset 90 is executed again so that the aforementioned problem is alleviated. In this case, the pieces of data 9 collected in the previous step S1 may be discarded, and all pieces of data 9 may be collected again. Alternatively, additional pieces of data 9 may be collected while the pieces of data 9 collected in the previous step S1 are left undiscarded.

Subsequently, the annotation part 43 performs annotation on the suitability-inspected dataset 90 (Step S3). Annotation is the process of assigning a label 8 which represents information to be learned to each piece of data 9 included in the dataset 90 for the purpose of using the dataset 90 as training data for supervised machine learning.

The label 8 assigned to each piece of data 9 is ground truth data which is to be outputted from the learning model M when each piece of data 9 is inputted to the learning model M. For example, if it is desired to create a learning model M which outputs defects of an industrial product when image data about the industrial product is inputted thereto, Step S3 involves assigning the presence/absence of defects or the type of defect, if any, as the label 8 to each piece of image data.

In Step S3, for example, the annotation part 43 of the computer 10 displays a piece of data 9 included in the dataset 90 on the display part 20. Then, while viewing the piece of data 9 displayed on the display part 20, an annotation operator manipulates the input part 30 to input a label 8 to be assigned to the piece of data 9. The annotation part 43 assigns the label 8 inputted by the operator to the piece of data 9.

In Step S3, however, the annotation part 43 may perform the annotation through the use of techniques such as active learning utilizing uncertainty sampling or semi-supervised learning. The use of these techniques reduces burdens on the operator responsible for the annotation.

Subsequently, the data improvement part 44 improves the annotated dataset 90 (Step S4). In Step S4, the data improvement part 44 initially evaluates the dataset 90 to which the labels 8 are assigned. This detects a problem related to the labels 8 of the dataset 90. Then, the data improvement part 44 alleviates the problem related to the labels 8 of the dataset 90, based on the evaluation results.

For example, if the number of pieces of data 9 assigned with a certain label 8 is too large, the excess pieces of data 9 do not contribute to improvements in accuracy of the learning model M. For this reason, upon detecting that the proportion of the pieces of data 9 assigned with the certain label 8 is not less than a predetermined value, the data improvement part 44 excludes some pieces of data 9 assigned with the certain label 8 from the dataset 90.

On the other hand, if the number of pieces of data 9 assigned with a certain label 8 is too small, the certain label 8 cannot be sufficiently learned in the next step S5. For this reason, upon detecting that the proportion of the pieces of data 9 assigned with the certain label 8 is not greater than a predetermined value, the data improvement part 44 displays the detection result on the display part 20. In this case, the operator in Step S4 adds pieces of data 9 to be assigned with the certain label 8 to the dataset 90. Also, the data improvement part 44 may expand the small number of pieces of data 9 assigned with the certain label 8 in the dataset 90 to thereby automatically increase the number of pieces of data 9 assigned with the certain label 8.

The data improvement part 44 may also automatically detect that an incorrect label 8 has been assigned in the annotation to correct the label 8. For example, the data improvement part 44 is capable of detecting and correcting errors of the labels 8 through the use of techniques utilizing artificial intelligence such as Confident Learning or Divide Mix. The data improvement part 44 may also evaluate and improve the validity of the assigned labels 8 through the use of variations in the data 9 in a feature space or statistical variations in the data 9.

The data improvement part 44 may also detect and correct errors of the labels 8 by inputting the data 9 to a pre-trained model created by provisionally executing the machine learning to be described in Step S5 and by comparing the output results from the pre-trained model with the labels 8 assigned to the data 9.

The computer 10 stores the dataset 90 improved by the data improvement part 44 in the storage part 13.

Subsequently, the learning part 45 performs machine learning using the dataset 90 improved in Step S4 (Step S5). The learning part 45 uses the dataset 90 as training data to create the learning model M through supervised machine learning. Specifically, parameters of the learning model M are adjusted so that a result corresponding to a label 8 is outputted from the learning model M when a piece of data 9 is inputted to the learning model M. The created learning model M is outputted from the computer 10 and provided to the user.

Thereafter, the user of the learning model M applies the learning model M to the actual operational data. For example, the user inputs image data about an industrial product to the learning model M, and performs a defect inspection on the industrial product, based on the results outputted from the learning model M. However, there are cases in which the tendency of the operational data gradually changes over time, so that the accuracy of the output results decreases when the learning model M is applied to the operational data.

The computer 10 periodically acquires the operational data of the user. Then, the data monitoring part 46 periodically monitors the difference (drift) between the dataset 90 stored in the storage part 13 in Step S4 described above and the operational data (Step S6). Specifically, the data monitoring part 46 compares the dataset 90 used for the learning of the learning model M with the dataset of the operational data to be applied to the learning model M during the actual operation. The data monitoring part 46 thus detects the difference in tendency between the dataset 90 during the learning and the dataset of the operational data.

Specifically, the data monitoring part 46 detects the difference in tendency between the datasets through the use of, for example, a machine learning model capable of detecting a difference in tendency between datasets. Alternatively, the data monitoring part 46 may detect the difference in tendency between the datasets by calculating feature vectors of the respective pieces of data and then using a statistical test such as a chi-square test on a feature space where these feature vectors are plotted.

If the data monitoring part 46 judges that there is a constant or more tendency difference between the dataset 90 during the learning and the dataset of the operational data, there is a likelihood that the accuracy of the learning model M during the actual operation has decreased. In this case, the data monitoring part 46 judges whether or not the tendency of the dataset 90 can be improved by correcting or adding some pieces of data 9 (Step S7).

If the data monitoring part 46 judges that the tendency of the dataset 90 can be improved by correcting or adding some pieces of data 9, the procedure returns to Step S4, in which the dataset 90 is improved. For example, if a specific label 8 which occurs during the actual operation has not been learned, the procedure returns to Step S4, in which the data improvement part 44 adds a piece of data 9 assigned with the specific label 8 to the dataset 90. Then, using the improved dataset 90, the machine learning in Step S5 is performed again to create the learning model M again.

On the other hand, if the data monitoring part 46 judges in Step S7 that the tendency of the dataset 90 cannot be improved by correcting or adding some pieces of data 9, the procedure returns to Step S1, and restarts from the preparation of the dataset 90. In this case, multiple pieces of data 9 may be collected again, and the dataset creation part 41 may create the dataset 90 as a whole again. Thereafter, the computer 10 executes the processes in Steps S1 to S6 again.

As described above, the machine learning system 1 improves the quality of the dataset 90 used for machine learning through multiple steps. The quality of the dataset 90 refers to the suitability of the dataset 90 for machine learning, the appropriateness of the labels 8, the proportion of the labels 8 in the dataset 90, the difference in tendency between the dataset and the operational data, and the like, as mentioned above. The machine learning system 1 creates and corrects the learning model M while constantly maintaining the quality of the dataset 90 at a high level. This achieves the efficient creation of the learning model M with high accuracy.

### <3. Modifications>

While the one preferred embodiment has been described hereinabove, the present disclosure is not limited to the aforementioned preferred embodiment. Various modifications will be described below mainly regarding differences from the aforementioned preferred embodiment.

In the aforementioned preferred embodiment, the procedure returns to Step S4 or S1 if it is judged in Step S6 that there is a constant or more tendency difference between the dataset 90 during the learning and the dataset of the operational data. However, the procedure may return to the machine learning in Step S5 if it is judged in Step S6 that there is a constant or more tendency difference between the dataset 90 during the learning and the dataset of the operational data.

The example of creating the learning model M which outputs defects of an industrial product when image data about the industrial product is inputted thereto is described in the aforementioned preferred embodiment. However, the learning model M is not limited to a learning model for outputting defects of an industrial product. For example, the learning model M may be a learning model for dividing image data into multiple regions or for determining a specific region. Further, the type of data 9 to be inputted to the learning model M is not limited to image data, but may be video data, audio data, numerical data, text data, and the like.

The details of the machine learning method may be appropriately modified or partially omitted without departing from the scope of the present disclosure. For example, the suitability inspection in Step S2 may be omitted. In addition, some of the components appearing in the aforementioned preferred embodiment and modifications may be appropriately combined, as long as no contradictions arise.

While the invention has been shown and described in detail, the foregoing description is in all aspects illustrative and not restrictive. It is therefore understood that numerous modifications and variations can be devised without departing from the scope of the invention.

## Claims

1. A method of machine learning, comprising the steps of:
a) collecting multiple pieces of data (9) to thereby prepare a dataset (90) for machine learning;
b) assigning labels (8) to respective pieces of data (9) included in said dataset (90);
c) alleviating a problem related to said labels (8) of said labeled dataset (90);
d) performing machine learning using said dataset (90) improved in said step c) to thereby create a learning model (M); and
e) judging a difference in tendency between said dataset (90) and operational data to which said learning model (M) is to be applied during actual operation,
wherein said method returns to said step a) or c) if it is judged that there is a difference in tendency between said dataset (90) and said operational data in said step e).

2. The method according to claim 1,
wherein a piece of data (9) assigned with a specific label (8) is excluded or added or a label (8) is corrected in said step c).

3. The method according to claim 1 or 2,
wherein said dataset (90) is inspected for suitability for machine learning after said step a) and before said step b),
wherein said method returns to said step a) if there is a problem with the suitability of said dataset (90) for machine learning, and
wherein said method proceeds to said step b) if there is no problem with the suitability of said dataset (90) for machine learning.

4. The method according to claim 3,
wherein said suitability inspection includes inspecting a difference in tendency between said dataset (90) and said operational data.

5. The method according to any one of claims 1 to 4,
wherein if it is judged that there is a difference in tendency between said dataset (90) and said operational data in said step e),
said method returns to said step c) when it is judged that the tendency of said dataset (90) can be improved by correcting or adding some pieces of data (9), and
said method returns to said step a) when it is judged that the tendency of said dataset (90) cannot be improved by correcting or adding some pieces of data (9).

6. A computer program (P) for causing a computer (10) to execute a method of machine learning as recited in any one of claims 1 to 5.
